## Europäisches Patentamt

## European Patent Office

## Office européen des brevets

(19)

(11) Veröffentlichungsnummer: **0 258 185**
**A2**

# EUROPÄISCHE PATENTANMELDUNG

(12)

(21) Anmeldenummer: 87810458.7

(22) Anmeldetag: 12.08.87

(51) Int. Cl.⁴: **A 47 J 37/08**

(30) Priorität: **12.08.86 CH 3225/86**

(43) Veröffentlichungstag der Anmeldung:
**02.03.88 Patentblatt 88/09**

(84) Benannte Vertragsstaaten:
**CH DE FR GB IT LI**

(71) Anmelder: **Weber AG Fabrik elektrotechnischer Artikel
und Apparate
Sedelstrasse 2
CH-6020 Emmenbrücke (CH)**

(72) Erfinder: **Rusch, Arthur
Ahornweg 5
CH-6020 Emmenbrücke (CH)**

(54) Zeitschalter eines Brotröstgerätes.

(57) Es wird ein Zeitschalter eines Brotröstgerätes vorgestellt, wobei das Bimetallelement (2) direkt in die Verklinkung (12) des Brotschlittens eingreift. Das Zeitstellglied besteht im wesentlichen aus einem L-förmigen Winkelstück (4), einer ortsfesten Führungsschiene (6) und einem über der Führungsschiene (6) verschiebbaren Abstandshalter (7). Der Abstandshalter (7) kann von einem Drehknopf (8) oder von einem Schieber verschoben werden. Die Position des Abstandshalters (7) auf der Führungsschiene (6) ist massgebend für die Röstzeit.

Fig.1

EP 0 258 185 A2

**Beschreibung**

## ZEITSCHALTER EINES BROTROESTGERAETES

Die Erfindung betrifft einen Zeitschalter eines Brotröstgerätes nach dem Obergriff des Patentanspruchs 1.

Ein solcher Zeitschalter ist bei allen modernen, handelsüblichen Brotröstgeräten (Toaster) vorgesehen um die Röstzeit auf das Röstgut einzustellen. Er besteht in der Regel aus einem Bimetallelement, das von einer elektrischen Heizwicklung umfasst ist und über einen Hebelmechanismus auf die Verklinkung des Brotschlittens eingreift. Das Bimetallelement ist an einem Ende fixiert, wobei die Ausdehnung des freien Endes bis zu einem einstellbaren Anschlag die Zeitverzögerung des Zeitschalters bewirkt. Danach wird die Heizwicklung des Bimetallelementes überbrückt, wodurch das Bimetallelement abkühlt und der Brotschlitten ausgeklinkt wird.

Solche Zeitschalter haben den Nachteil, dass viele einzelne Teile, wie Federn, Hebel, Achsen und Befestigungen, benötigt sind. Dadurch sind solche Zeitschalter relativ arbeitsintensiv in der Herstellung und lassen sich kaum automatisch fertigen. Zum Teil ist auch die Eichung der einstellbaren Röstzeiten problematisch.

Die Erfindung stellt sich nun die Aufgabe, Zeitschalter der oben genannten Art so auszubilden, dass sie automatengerecht und kostengünstig herstellbar sind und sich auf einfache Art eichen lassen.

Diese Aufgabe wird bei einem gattungsgemässen Zeitschalter durch die Merkmale des Patentanspruchs 1 gelöst.

Da das Bimetallelement nun direkt auf die Verklinkung des Brotschlittens eingreift, wird kein zusätzlicher Hebelmechanismus mehr benötigt. Das eigentliche Zeitstellglied besteht nur aus einem L-förmigen Winkelstück, das mit dem unteren Ende des Bimetallelementes verschweisst ist, aus einer ortsfesten Führungsschiene und aus einem verschiebbaren Abstandshalter . Zudem ist der zu bewegende Teil - der Abstandshalterklein und besitzt eine geringe Masse. Der Antrieb des Abstandshalters kann deshalb sehr einfach ausgebildet sein.

Weitere Vorteile der Erfindung und der in den Unteransprüchen angegebenen Weiterbildungen folgen aus der nachstehenden Beschreibung Dort wird die Erfindung anhand eines in der Zeichnung dargestellten Beispieles näher erläutert. Dabei zeigt:

Fig. 1 einen Zeitschalter eines Brotröstgerätes in Draufsicht,

Fig. 2 einen Querschnitt des Zeitschalters in Fig. 1 nach der Linie B-B, und

Fig. 3 einen Querschnitt des Zeitschalters in Fig. 1 nach der Linie B-B, und

Fig. 4 eine spezielle Ausgestaltung der Trägerplatte im Bereich des Drehknopfes.

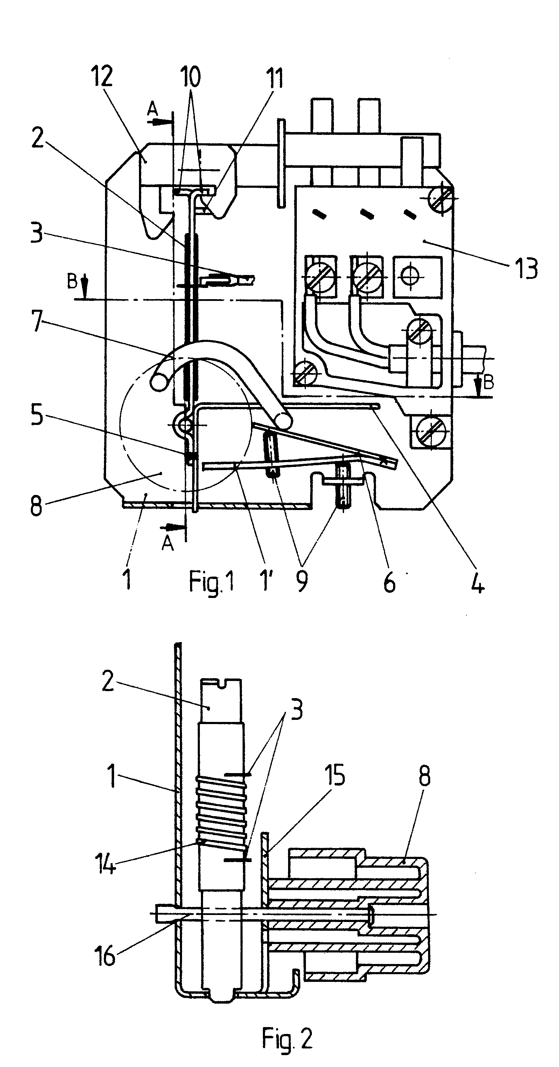

In Fig. 1 sind auf einer Trägerplatte 1 die wesentlichen Teile eines Zeitschalters für ein Brotröstgerät befestigt. Ein Bimetallelement 2 mit zwei elektrischen Anschlüssen 3 (hier nur eins sichtbar) ist mit einem L-förmigen Winkelstück 4 durch eine Verschweissung 5 an dem unteren Ende des Bimetallelementes 2 verbunden. Dabei verläuft der kürzere Schenkel des Winkelstückes 4 parallel zum Bimetallelement 2. Das Ende dieses Schenkels ist in einer rechteckigen Oeffnung der Trägerplatte 1 seitlich geführt. Eine ortsfeste Führungsschiene 6 ist mit einem Biegelappen 1' der Trägerplatte 1 verschweisst, und bildet zum längeren Schenkel des L-förmigen Winkelstückes 4 einen spitzen Winkel. Zwischen dem Winkelstück 4 und der Führungsschiene 6 ist ein Abstandshalter 7 über der Führungsschiene 6 verschiebbar. Der Abstandshalter 7 ist ein Z-förmiger Bügel mit rechten Winkeln und einem gebogenen Mittelstück. Der eine Schenkel des Abstandshalters 7 ist exzentrisch gelagert in einem Drehknopf 8 (nur strichliert angedeutet), so dass eine Drehung des Drehknopfes 8 eine Verschiebung des anderen Schenkels des Abstandshalters 7 über der Führungsschiene 6 bewirkt. Mit zwei Justierschrauben 9 wird die richtige Lage der Führungsschiene 6 zum Winkelstück 4 eingestellt. Wie aus der Figur ersichtlich, ist das untere Ende des Bimetallelementes 2 mit einer Ausbuchtung versehen, so dass die Achse des Drehknopfes 8 vom Bimetallelement 2 und vom kürzeren Schenkel des Winkelstückes 4 umfasst ist. Das obere Ende des Bimetallelementes 2 ist mit zwei Nasen 10 versehen, wobei die eine nach links und die andere nach rechts verläuft. Das Bimetallelement 2 liegt rechts gegen einen Anschlag 11. Die Nasen 10 greifen in eine Verklinkung 12 des Brotschlittens ein. Der Drehpunkt der Verklinkung 12 ist strichliert angedeutet. Ein elektrischer Schalter 13 wird durch Einrasten oder Ausklinken des Brotschlittens bedient. Er besteht - wie üblich - aus zwei Schaltern und einem Unterbrecher. Damit wird die Stromversorgung des Bimetallelementes 2 und der Heizelemente des Brotröstgerätes ein- und ausgeschaltet.

In Fig. 2 ist ein Querschnitt des Zeitschalters gemäss der Linie A-A in Fig. 1 dargestellt. Es wurden dieselben Bezugszeichen verwendet wie in Fig. 1. Auf dem Bimetallelement 2 ist eine Heizwicklung 14 angebracht. Der Drehknopf 8 liegt gegen einen Biegelappen 15 der U-förmigen Trägerplatte 1 und ist mit einem Niet 16 als Drehachse auf der Trägerplatte 1 befestigt. Der Niet 16 kann ein Vollniet oder ein Rohrniet sein, und ist vorteilhafterweise an seinem Ende zusammengequetscht. Damit ergibt sich eine besonders einfache Befestigung des Drehknopfes 8. Wie nun aus den Figuren 1 und 2 ersichtlich, ist die Achse des Drehknopfes 8 - durch die spezielle Ausgestaltung des Bimetallelementes 2 und des Winkelstückes 4 - gleichzeitig Drehachse des Bimetallelementes 2. Das Bimetallelement 2 und das Winkelstück 4 sind demnach um die Achse des Drehknopfes 8 (beschränkt) drehbar gelagert.

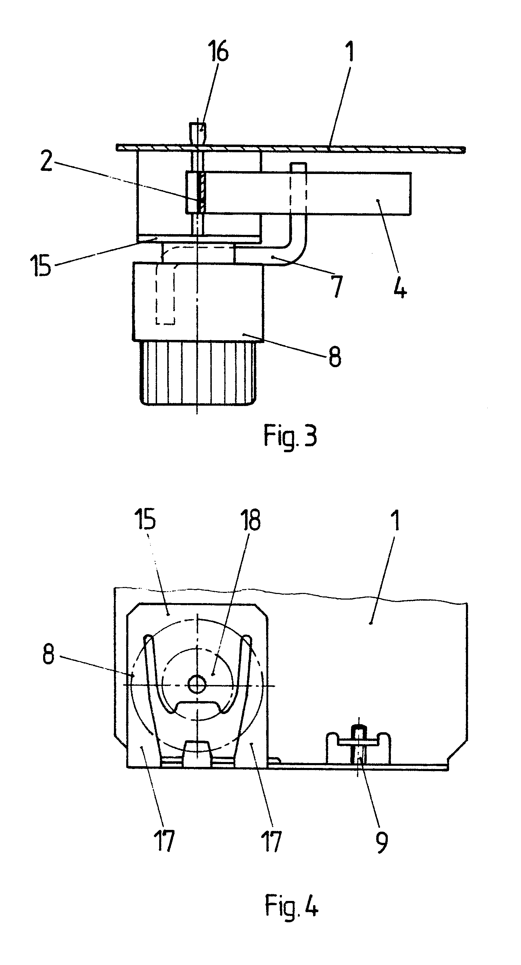

In Fig. 3 ist eine Ansicht des Zeitschalters gemäss der Linie B-B angegeben. Es wurden wieder dieselben Bezugszeichen verwendet für dieselben Elemente wie in Figur 1 und 2.

Fig. 4 zeigt eine spezielle Ausgestaltung des Biegelappens 15 der Trägerplatte 1 im Bereich des Drehknopfes 8. Der Biegelappen 15 besteht aus zwei parallelen Stegen 17, die mit einer Drehknopfauflage 18 verbunden sind. Die Auflage 18 drückt gegen den (strichliert angedeuteten) Drehknopf 8 und gibt ihm somit die nötige federnde Vorspannung.

Die Funktionsweise des Zeitschalters ist nun wie folgt: Das Bimetallelement 2 ist in eingerastetem Zustand des Brotschlittens (Fig. 1) von der Achse des Drehknopfes 8 und von dem Anschlag 11 gegen rechts fixiert. Das Bimetallelement 2 wird jetzt aufgeheizt und das freie Ende kann sich aufgrund der noch vorhandenen Bewegungsfreiheit des Winkelstückes 4 nach links bewegen, bis der längere Schenkel des Winkelstückes 4 an dem Abstandshalter 7 ansteht. Das Winkelstück 4 und die Führungsschiene 6 klemmen sozusagen den Abstandshalter 7 ein. Eine weitere Drehung vom freien Ende des Bimetallelementes 2 ist nun nicht mehr möglich, so dass das obere von der Verklinkung 12 eingespannte Ende des Bimetallelementes 2 nach links drehen wird. Der Brotschlitten wird sich ein wenig heben, da nun die linke Nase 10 des Bimetallelementes 2 in die Verklinkung 12 eingreift. Durch diese Bewegung des Brotschlittens wird die Heizwicklung 14 des Bimetallelementes 2 mittels des elektrischen Schalters 13 kurzgeschlossen. Das Bimetallelement 2 kühlt ab und das obere Ende bewegt sich wieder nach rechts, wodurch der Brotschlitten ausgeklinkt wird.

Wie aus dem Obigen erhellt, wird durch Verschieben des Abstandshalters 7 der Zeitpunkt, bis der Brotschlitten ausklinken kann, verzögert. Das Zeitstellglied des Zeitschalters wird demnach im wesentlichen vom L-förmigen Winkelstück 4, von der ortsfesten Führungsschiene 6 und von dem verschiebbaren Abstandshalter 7 gebildet. Mit den Justierschrauben 9 werden die genauen Röstzeiten kalibriert in Uebestimmung mit der Skala auf dem Drehknopf 8.

Das Verschieben des Abstandshalters kann auch mittels eines Schiebers ausgeführt werden. Dazu ist der Biegelappen 15 mit einem Schlitz versehen, in dem der Abstandshalter 7 geführt wird. Der Schieber ist dabei auf den Abstandshalter 7 aufgesteckt. Hinter dem Schlitz ist ein Federring vorgesehen, der die nötige Fixierung und Reibung des Schiebers bewirkt.

Da der oben beschriebene Zeitschalter nunmehr äusserst wenige Teile erfordert, die zudem eine sehr einfache Form aufweisen, ist eine automatengerechte und kostengünstige Fertigung des Zeitschalters gewährleistet. Auch die Kalibrierung der Röstzeiten lässt sich automatisch bewerkstelligen.

**Bezeichnungsliste** (ist nur für den Prüfer bestimmt, jedoch nicht Teil der Anmeldung)

1 Trägerplatte
1' Biegelappen
2 Bimetallelement
3 elektrischer Anschluss
4 L-förmiges Winkelstück
5 Verschweissung
6 Führungsschiene
7 verschiebbarer Abstandshalter
8 Drehknopf
9 Justierschrauben
10 Nase
11 Anschlag
12 Verklinkung
13 elektrischer Schalter
14 Heizwicklung
15 Biegelappen
16 Niet
17 Steg
18 Drehknopfauflage

## Patentansprüche

1. Zeitschalter eines Brotröstgerätes mit

- einem Bimetallelement (2) und
- einem Zeitstellglied, das auf eine vorgegebene Röstzeit einstellbar ist,

**dadurch gekennzeichnet, dass**
- das Bimetallelement (2) direkt in Eingriff steht mit der Verklinkung (11) des Brotschlittens, und
- das Zeitstellglied im wesentlichen besteht aus

- einem metallischen L-förmigen Winkelstück (4), dessen kürzerer Schenkel mit dem unteren Ende (5) des Bimetallelementes verschweisst ist,
- einer ortsfesten Führungsschiene (6), die einen spitzen Winkel bildet zum längeren Schenkel des Winkelstückes (4), und - einem verschiebbaren Ab- standshalter (7) zwischen dem Winkel- stück (4) und der Führungsschiene (6), wobei dessen Position auf der Führungsschiene (6) massgebend ist für die Röstzeit.

2. Zeitschalter eines Brotröstgerätes nach Anspruch 1, **dadurch gekennzeichnet,** dass das obere Ende des Bimetallelementes (2) mit einer nach links und einer nach rechts biegenden Nase (10) versehen ist.

3. Zeitschalter eines Brotröstgerätes nach Anspruch 1 oder 2, **dadurch gekennzeichnet,** dass der Abstandshalter (7) ein Z-förmiger Bügel ist, der durch eine exzentrische Lagerung mit einem Drehknopf (8) verschiebbar ist, und dass die Achse des Drehknopfes (8) von dem Bimetallelement (2) und dem L-förmigen Winkelstück (4) umfasst ist.

4. Zeitschalter eines Brotröstgerätes nach Anspruch 1 oder 2, **dadurch gekennzeichnet,** dass der Abstandshalter (7) mit einem Schieber verschiebbar ist, der in einem Führungsschlitz geführt ist.

5. Zeitschalter eines Brotröstgerätes nach Anspruch 3, **dadurch gekennzeichnet,** dass die Achse des Drehknopfes (8) in einer U-förmigen Trägerplatte (1) gelagert ist, und dass ein Biegelappen (15) der Trägerplatte (1) mit einer über zwei parallelen Stegen (17) verbundenen Drehknopfauflage (18) versehen ist, der dezentral ein Loch für die Lagerung der Achse aufweist, so dass der Drehknopf (8) von der Drehknopfauflage (18) stets vorgespannt ist.

6. Zeitschalter eines Brotröstgerätes nach Anspruch 5, **dadurch gekennzeichnet,** dass die Achse des Drehknopfes (8) ein Niet (16) ist.

0258185

Fig.1

Fig. 2

WAG 2/86

0258185

Fig. 3

Fig. 4